# EUROPEAN PATENT SPECIFICATION

(11) **EP 2 364 006 B1**
(45) Date of publication and mention of the grant of the patent: **19.06.2013**
(21) Application number: 10154914.5
(22) Date of filing: 26.02.2010
(51) Int. Cl.: H04M 1/725, G06F 3/01

(54) **Near-field communication (NFC) system providing mobile wireless communications device operations based upon timing and sequence of nfc sensor communication and related methods**
Nahfeldkommunikationssystem mit mobilen drahtlosen Kommunikationsvorrichtungsfunktionen basierend auf Zeitpunkt und Sequenz der NFC-Sensorkommunikation und zugehörige Verfahren
Système de communication de champ proche (NFC) fournissant des opérations de dispositif de communication sans fil mobile basées sur la synchronisation et la séquence de la communication du capteur de nfc et procédés apparentés

(43) Date of publication of application: 07.09.2011
(73) Proprietor: Research In Motion Limited, Waterloo, ON N2L 3W8 (CA)
(72) Inventor: Griffin, Jason Tyler, Waterloo Ontario N2L 3W8 (CA); Fyke, Steven Henry, Waterloo Ontario N2L 3W8 (CA); Bender, Christopher Lyle, Waterloo Ontario N2L 3L3 (CA); Carbonell Duque, Santiago, Waterloo Ontario N2L 5Z5 (CA); Walker, David Ryan, Waterloo Ontario N2L 3W8 (CA); Pasquero, Jerome, Waterloo Ontario N2l 3W8 (CA)
(74) Representative: Fennell, Gareth Charles

(56) References cited:
- US-A1- 2006 178 110
- US-A1- 2007 037 614
- US-A1- 2008 160 984
- JENQ-MUH HSU ET AL: "Design a Virtual Object Representing Human-Machine Interaction for Music Playback Control in Smart Home" COMPLEX, INTELLIGENT AND SOFTWARE INTENSIVE SYSTEMS, 2009. CISIS '09. INTERNATIONAL CONFERENCE ON, IEEE, PISCATAWAY, NJ, USA, 16 March 2009 (2009-03-16), pages 614-619, XP031469529 ISBN: 978-1-4244-3569-2

## Description

### Technical Field

This application relates to the field of communications, and more particularly, to mobile wireless communications devices and related methods that use near-field communication (NFC).

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. These short-range communications include payment and ticketing, electronic keys, identification, device set-up service and similar information sharing. This short-range high frequency wireless communications technology exchanges data between devices over a short distance, such as only a few centimeters.

With NFC technology becoming more widely adopted, it is now used with portable wireless communications devices in association with other short-range wireless communications, such as a wireless Bluetooth connection. For example, an NFC connection is often used to establish a wireless Bluetooth connection in which data for establishing the Bluetooth connection is communicated.

US2007/0037614 discloses a method and apparatus for RFID-triggered personal reminders.

US2008/0160984 discloses a method and apparatus for altering mobile device behavior based on RFID tag discovery.

"Design a Virtual Object Representing Human-Machine Interaction for Music Playback Control in Smart Home" by Jenq-Muh Hsu, International Conference on Complex, Intelligent and Software Intensive Systems, CISIS '09, pages 614-619 discloses intelligent home appliances and friendly human-machine interface design that can provide a more comfortable living space for residents in smart homes.

### Brief Description of the Drawings

FIG. 1 is a schematic block diagram of a near field communication (NFC) system in accordance with an exemplary embodiment.

FIG. 2 is a schematic block diagram of an alternative embodiment of the NFC system of FIG. 1.

FIGS. 3 through 6 are a series of schematic block diagrams illustrating NFC sensor communication sequences and corresponding mobile device operations for the system of FIG. 1.

FIG. 7 is a schematic block diagram of another alternative embodiment of the NFC system of FIG. 1.

FIG. 8 is a flow diagram illustrating method aspects associated with the NFC system of FIG. 1.

FIG. 9 is a schematic block diagram illustrating exemplary components of a mobile wireless communications device that may be used with the NFC systems of FIGS. 1, 2, and 7.

FIG. 10 is a schematic block diagram of still another alternative embodiment of the NFC system of FIG. 1.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a near-field communication (NFC) system is disclosed herein which may include a plurality of spaced-apart NFC sensors and at least one mobile wireless communications device. The at least one mobile wireless communications device may include a portable housing, an NFC circuit carried by the portable housing and configured to establish NFC communications with the NFC sensors when moved in close proximity therewith, and a first controller carried by the portable housing and coupled to the NFC circuit. The first controller may be configured to perform different mobile device operations based upon a timing and sequence in which the NFC sensors communicate. As such, the mobile wireless communications device may advantageously be used to relatively quickly and conveniently initiate different mobile device operations by changing the timing or sequence of the NFC sensors that are communicated with.

More particularly, in accordance with one example the different mobile device operations may comprise different audio playback operations. By way of example, the first controller may be configured to move forward or backward through an audio track based upon different (e.g., respective forward or reverse) movement sequences relative to the NFC sensors. Similarly, the first controller may be configured to skip forward or backward to a next or previous audio track based upon different (e.g., respective forward or reverse) movement sequences relative to the NFC sensors. The different audio playback operations may also include raising and lowering a volume of audio playback.

In accordance with another example, the different mobile device operations may comprise device locking and unlocking operations. That is, the timing and sequence of NFC sensor communication may act as a password for unlocking the at least one mobile wireless communications device, as well as a locking sequence for locking the at least one mobile wireless communications device from unauthorized use. Additionally, the at least one mobile wireless communications device may further comprise a wireless transceiver coupled to the first controller. As such, the different mobile device operations may comprise initiating and discontinuing communications via the wireless transceiver circuit.

The NFC system may further include a second controller coupled to the plurality of spaced-apart NFC sensors and configured to perform a plurality of different remote operations also based upon the timing and sequence in which the NFC sensors are communicated with. By way of example, the different remote operations may comprise different audio playback operations. In some embodiments, the NFC system may further include a substrate carrying the plurality of spaced-apart NFC sensors, such as an article of clothing, for example. Furthermore, the at least one mobile wireless communications device may comprise a plurality thereof configured to perform the different mobile device operations based upon both housings being moved in respective sequences.

A similar NFC system may include a plurality of spaced-apart NFC sensors, and at least one mobile wireless communications device comprising a portable housing and an NFC circuit carried by the portable housing and configured to establish NFC communications with the NFC sensors when the portable housing is moved in close proximity therewith. The system may further include a controller coupled to the plurality of spaced-apart NFC sensors and configured to perform a plurality of different remote operations based upon a timing and sequence in which the NFC sensors are communicated with.

A related mobile wireless communications device, such as the one described briefly above, and NFC method are also provided. The method may be for use with a plurality of spaced-apart NFC sensors and at least one mobile wireless communications device comprising a portable housing and an NFC circuit carried by the portable housing. The method may include establishing NFC communications between the NFC circuit and the NFC sensors when the portable housing is moved in close proximity therewith, and performing different mobile device operations based upon a timing and sequence in which the NFC sensors are communicated with.

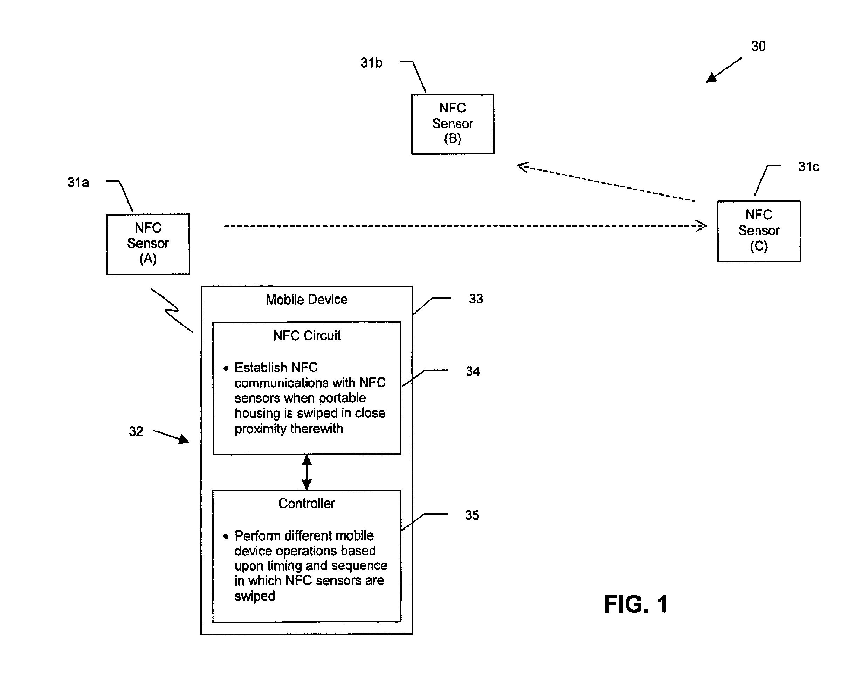

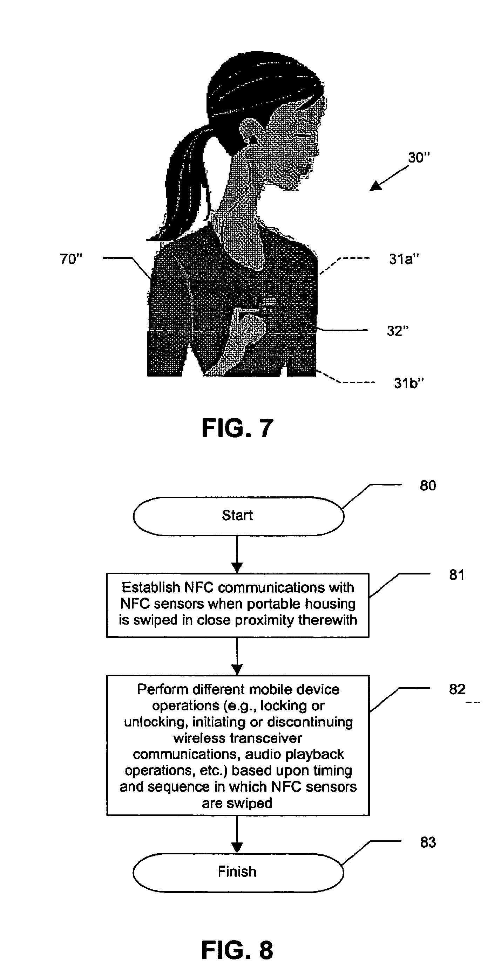

Referring initially to FIGS. 1 and 8, an NFC system **30** illustratively includes a plurality of spaced-apart NFC sensors **31a-31c** and a mobile wireless communications device **32** (also referred to as a "mobile device" herein). NFC is a short range variant of radio-frequency identification (RFID), typically operating at approximately 13.56 MHz. NFC technology allows a wireless connection to be established between a mobile device that has an embedded NFC chipset and an ISO 14443 reader terminal at a range of up to about 20cm, so that the devices are "swiped" or otherwise moved in close proximity to communicate. NFC is a standardized technology that may be used in various applications such as mobile banking, ticketing, secure physical access, etc. The mobile device **32** may further include additional wireless capabilities beyond NFC in some embodiments, as will be discussed further below, but this is not required in all embodiments. The NFC sensors **31a**-**31c** may be passive tags or active readers depending upon the given implementation, as will be discussed further below. While three NFC sensors **31a**-**31c** are shown in the present example, other numbers of sensors may be used in different embodiments.

The mobile wireless communications device **32** illustratively includes a portable housing **33**, and an NFC circuit **34** carried by the portable housing and configured to establish NFC communications with the NFC sensors **31a**-**31c** when the portable housing is moved in close proximity therewith, at Blocks **80**-**81**. The mobile device **32** further illustratively includes a controller **35** carried by the portable housing **33** and coupled to the NFC circuit **34**. The controller **35** is configured to perform different mobile device operations based upon a timing and sequence in which the NFC sensors are communicated with, at Block **82**, which concludes the method illustrated in FIG. 8 (Block **83**). Example mobile devices may include portable or personal media players (e.g., MP3 players, video players, etc.), remote controls (e.g., television or stereo remotes, etc.), portable gaming devices, portable or mobile telephones, smartphones, etc.

In the example of FIG. 1, the sequence in which the mobile device **32** is moved is from sensor **31a** to sensor **31c**, then from sensor **31c** to sensor **31b** (i.e., from point A to C to B), as indicated by the dashed arrows. By way of example, this (or other) sequences and timing of movement may be used to initiate mobile device operations such as audio playback operations, device locking or unlocking, initiating or discontinuing wireless transceiver communications, etc., as will be discussed further below. As such, the mobile device **32** may advantageously be used to relatively quickly and conveniently initiate different mobile device operations by changing the timing or sequence in which the NFC sensors **31a**-**31c** are communicated with.

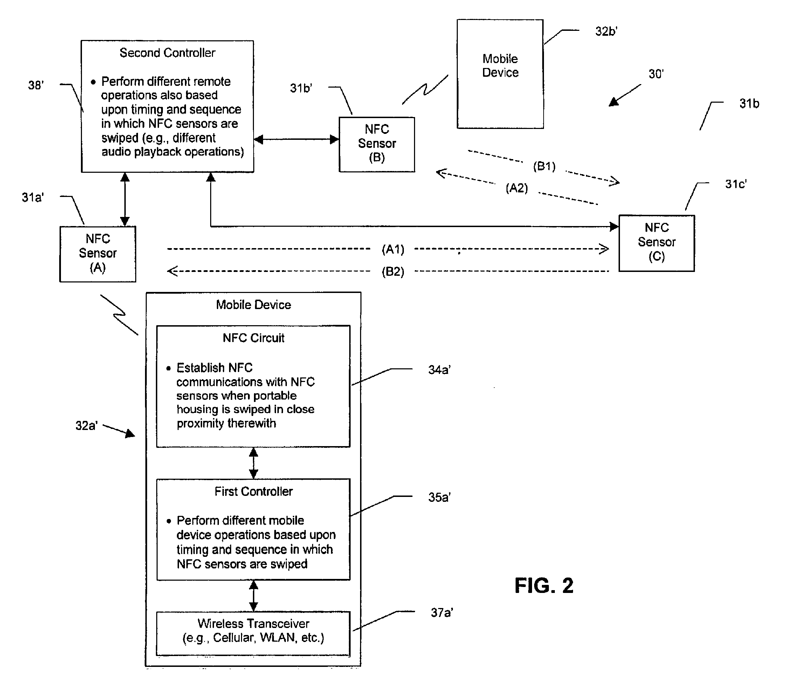

Turning additionally to FIG. 2, an example in which two mobile devices **32a'*,* 32b'** are moved in respective sequences is shown. In some applications, different mobile device operations may be performed based upon both mobile devices **32a*'*, 32b*'*** being moved in respective sequences. The first mobile device **32a*'*** further illustratively includes a wireless transceiver **37a*'*** coupled to a first controller **35a*'*.** The wireless transceiver **37a*'*** may comprise a cellular transceiver, although other suitable wireless communications formats, such as wireless LAN (e.g., 802.11x, Bluetooth), WiMAX, etc., may also be used, for example. In the present embodiment, the first mobile device **32a'** is moved from the NFC sensor **31a'** to sensor **31c'** (arrow A1) to sensor **31b'** (arrow A2) (i.e., from point A to B to C), while the mobile device **32b'** is moved in an opposite sequential order (i.e., from point B to C to A, as indicated by arrows B1 and B2).

The system **30'** further illustratively includes a second controller **38'** coupled to the NFC sensors **31a'-31c'**. The second controller **38'** is similarly configured to perform different remote operations (i.e., operations performed off board the mobile devices **32a'**, **32b'**) also based upon the timing and sequence in which the NFC sensors **31a'-31c'** are communicated with. The remote operations may be in addition to, or in combination with, the operations performed by (i.e., on board) the mobile devices **32a'**, **32b'**. One exemplary operation is that moving one or both of the mobile devices **32a', 32b'** in predetermined sequences may cause the second controller **38'** to initiate wireless communications with the wireless transceiver **37a'**, such as for Bluetooth communications. Movement in a different sequence, or at a different speed, for example, may then terminate the wireless (e.g., Bluetooth) communications or disable the wireless transceiver **37a**' altogether.

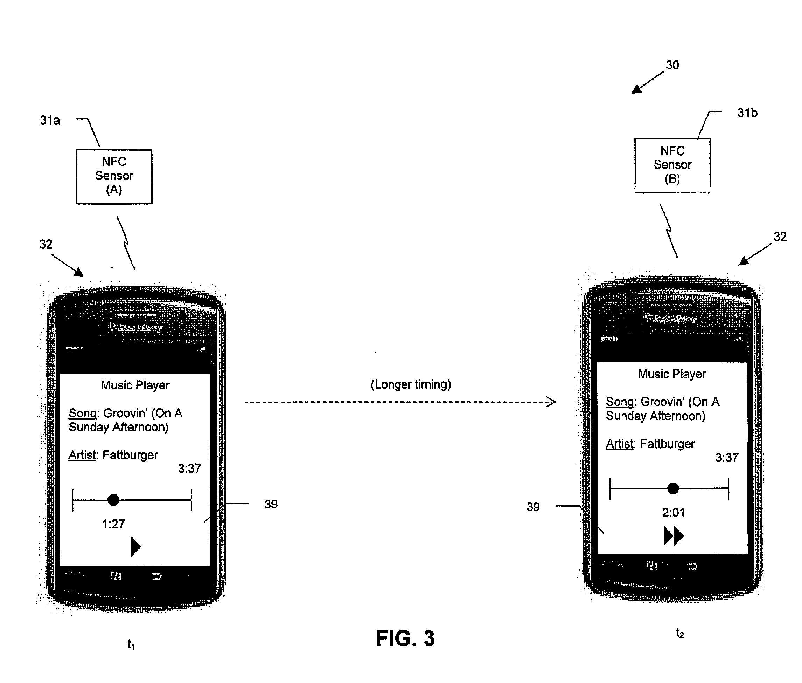

More particularly, in one exemplary embodiments the NFC sensors **31a'-31c,** may be positioned within an automobile, such as on a dashboard thereof. The mobile device **32a'** may be moved in the appropriate sequence and timing to initiate a Bluetooth link with the automobile (e.g., upon entering the automobile), and similarly may be moved in a different sequence with the appropriate timing to discontinue the Bluetooth link (e.g., upon exiting the automobile). Continuing with the same example, one or both of the mobile devices **32a'**, **32b'** may be used to control the audio playback operations (e.g., play, skip, rewind, fast forward, volume up or down, etc.). Audio playback operation control will be discussed further below with reference to FIGS. 3-6.

In another exemplary implementation, the second controller **38'** may serve as a security system controller. For example, the second controller **38'** may be used to lock or unlock a door, enable or disable one or more components of a security system, etc. Thus, moving one or both of the mobile devices **32a'**, **32b'** in the appropriate sequence and with the appropriate timing will serve as a password or combination to cause the second controller **38'** to unlock or lock a door, arm or disarm security system components, etc.

It should be noted that in such embodiments an NFC circuit may be used by itself (e.g., a passive NFC circuit carried on a key card, key chain, jewelry, or other substrate), rather than as part of a mobile device. Moreover, it should also be noted that the second controller **38'** need not always be linked to the NFC sensors **31a'-31c'** as shown in FIG. 2. An example includes controlling a car stereo via Bluetooth where the vehicle was not originally equipped with NFC capabilities. Passive NFC tags may be added to the interior of the vehicle as an aftermarket product that do not communicate with the car or stereo. In such instances, one or both of the mobile devices **32a'**, **32b'** may be set up to recognize the passive tags in a gesture sequence (e.g., using a software application running on the mobile device), and then connect and control the stereo via its Bluetooth connection.

In such instances where the second controller **38'** is not linked to the NFC sensors **31a'-31c'** (such as the Bluetooth stereo example described above), the first controller **35a'** may track the sequence and timing in which the NFC sensors are communicated with. The first controller **35a'** may then cause the wireless transceiver **37a'** to relay this information (or corresponding remote commands) to the second controller **38'** to initiate the appropriate actions based thereon.

In accordance with another example, the different mobile device operations may comprise device locking and unlocking operations. That is, the timing and sequence of NFC sensor **31a'-31c'** communication may act as a password or combination for unlocking one or both of the mobile devices **32a'**, **32b',** as well as a locking sequence for locking one or both of the mobile devices from unauthorized use.

Turning now to FIGS. 3-6, an exemplary implementation in which the timing and sequence of movement of the mobile device **32** are used to control various audio playback operations is now described. More particularly, the controller **35** is configured to play digital audio music files (e.g., MP3, etc.) via an output transducer or a headphone jack, and provide a visual output of the playback status on a display **39**. At time t₁ (FIG. 3), the mobile device **32** is currently playing a song entitled "Groovin' (On A Sunday Afternoon)" by Fattburger, and 1:27 of the song has already been played. The audio play mode is indicated by the play symbol **"►"** The mobile device **32** is then moved from NFC sensor **31a** to sensor **31b** in a left-to-right sequence (i.e., from point A to point B) and with a relatively long timing (i.e., the mobile device is moved at a relatively "slow" speed from point A to point B, as indicated by the single-wide dashed arrow). The relatively long timing and left-to-right movement sequence results in the controller **35** initiating a "fast forward" operation at time t₂ when the NFC sensor **31b** is communicated with to move the playback indicator forward through the song, as indicated by the fast forward symbol "►►". By way of example, the relatively long timing may be about one second to move from NFC sensor **31a** to sensor 31b, although other timing may also be used.

At the illustrated time t₂, the current song has been fast-forwarded to a point 2:01 into the song. Normal play operation may be resumed by communicating with a single one of the NFC sensors **31a** or **31b**, for example. Another option is that the same left-to-right, long timing sequence may be repeated one or more times to speed up the rate of fast forwarding, e.g., to 2X, 3X, etc., fast forward speeds.

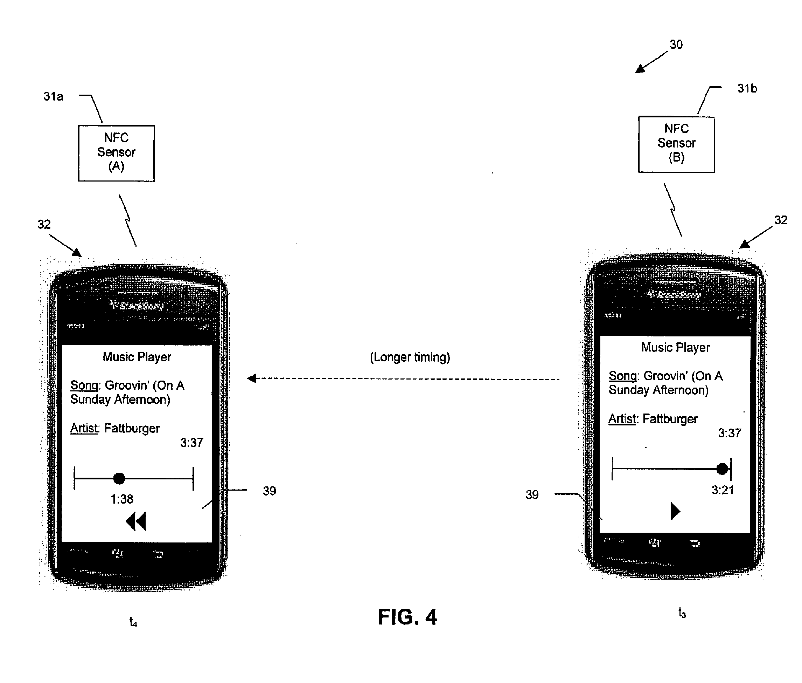

At a time t₃ (FIG. 4), play of the current song has resumed and has proceeded to a point 3:21 into the song. The mobile device **32** is then moved in a right-to-left sequence from the NFC sensor **31b** to the sensor **31a** (i.e., from point B to A), again with substantially the same relatively long timing described above. In this case, the opposite operation to that described above occurs, i.e., the controller **32** performs a "rewind" operation to move the playback indicator backwards through the song, as indicated by the rewind symbol "◄◄". Here again, a second movement of the same timing and sequence may be used to increase the rewind rate, as similarly discussed above for the case of a fast forward operation.

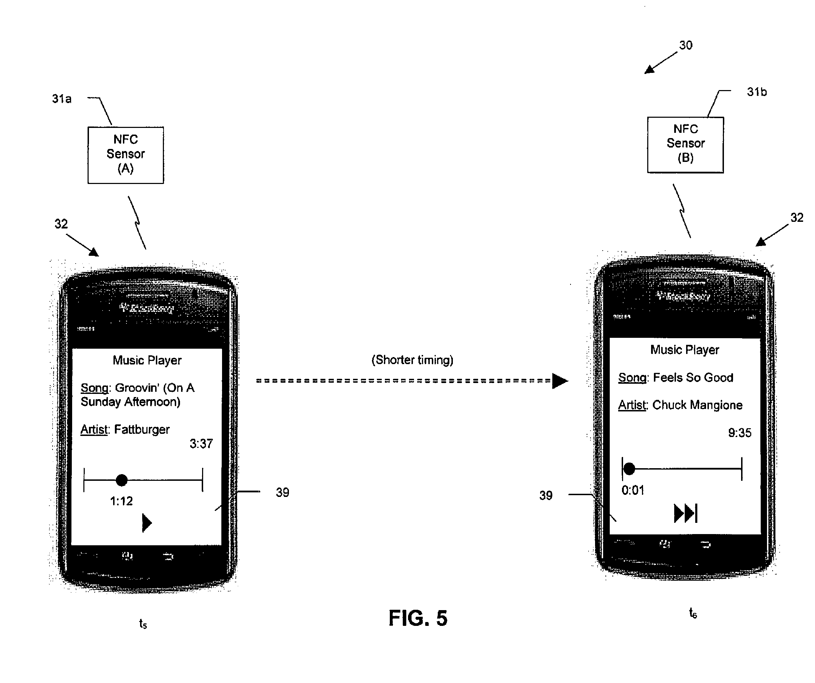

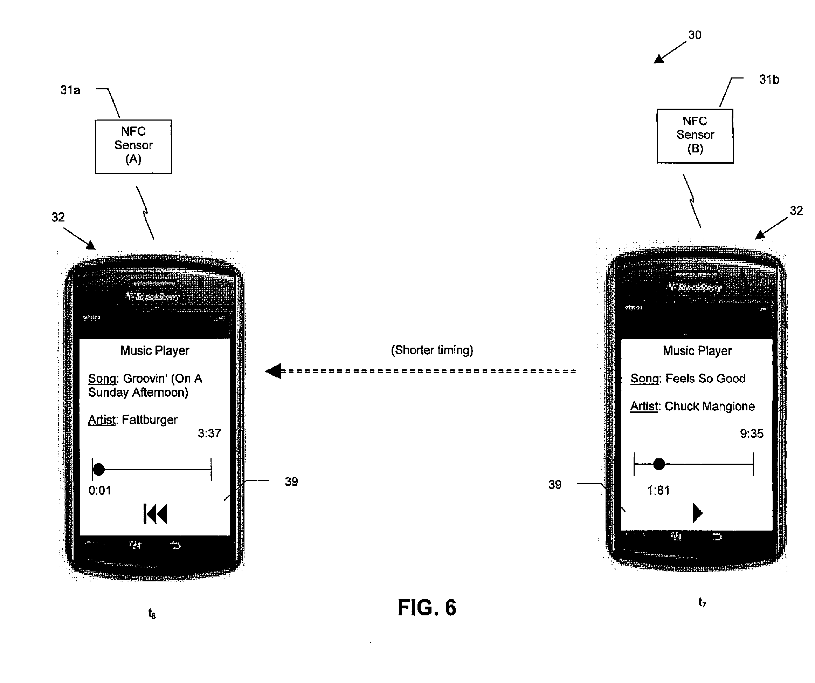

Forward and backward song skipping operations are respectively illustrated in FIGS. 5 and 6. More particularly, at time t₅, the controller **35** is again playing the song and it is at a point 1:12 into playback. The mobile device **32** is then moved in the same left-to-right sequence (i.e., from NFC sensor **31a** to sensor **31b**, or from point A to B) as described with reference to FIG. 3, but now with a shorter timing between moves (i.e., the mobile device is moved at a "faster" pace between the two sensors), as indicated by the double-wide dashed line in FIG. 5. Upon communication with the NFC sensor **31a** at time t₆, this results in the controller **35** performing a forward skip operation, skipping ahead to a next song (i.e., "Feels So Good" by Chuck Mangione), as indicated by the forward skip symbol "►►|". By way of example, the shorter timing may be about 0.5 second, although other timings may also be used. Moreover, it should be noted that the controller **35** may accept a range of timings around the target timing as being valid (e.g., from 0.4 to 0.6 second) for initiating a given movement sequence.

The backward skip operation (FIG. 6) works in the opposite fashion. Namely, the controller **35** is playing the current song ("Feels So Good") and is 1:81 into the song at time t₇, at which point the mobile device **32** is moved from the NFC sensor **31b** to the sensor **31a** (i.e., from right to left, or from point A to point B) at the shorter timing interval (i.e., at the faster pace). This results in a backward or reverse skip operation, as indicated by the backward skip symbol "|◄◄", and skipping to the prior song (i.e., back to "Groovin'").

Referring additionally to FIG. 7, in some embodiments the NFC system **30** may further include a substrate **70*"*** carrying spaced-apart NFC sensors **31a*''*, 31b*''*.** More particularly, in this embodiment, the substrate **70*''*** is an article of clothing, namely a shirt. Here, the NFC sensors **31a*''*, 31b*''*** are embedded in a sleeve of the shirt. It will be appreciated that NFC sensors may be carried by other articles of clothing as well, such as belts, jackets, pants, jewelry, etc. In addition, other substrates may also be used. One example includes an exercise machine (e.g., treadmill, elliptical trainer, stair stepper, etc.) to control the various operations of the machine, or equipment associated therewith (i.e., to control a television paired with the exercise machine, such as for volume or channel up or down movement, etc.).

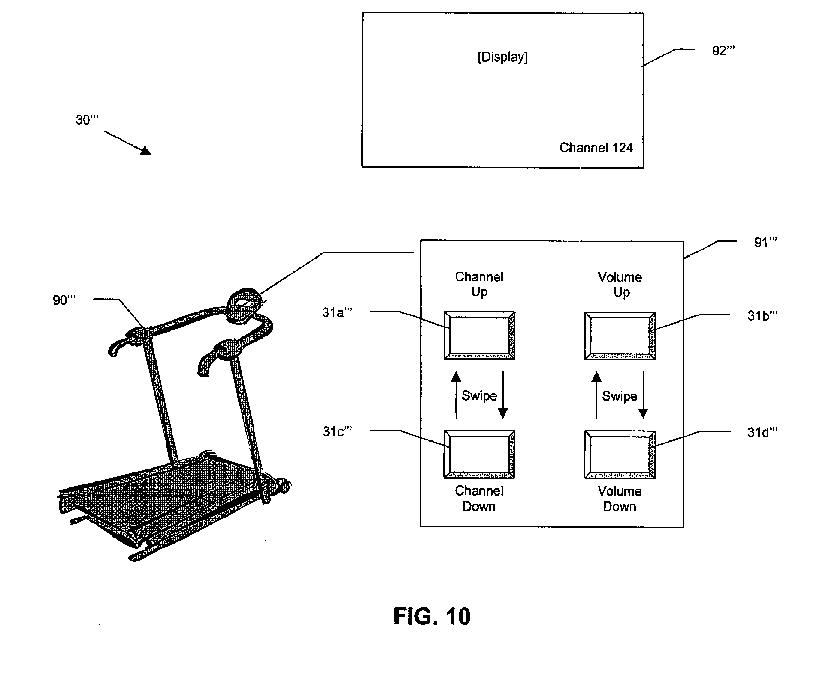

An exemplary system **30***'**''*** including an exercise machine is shown in FIG. 10. Here, the exercise machine is a treadmill **90*'''*,** which includes a control panel **91*'''*** with NFC sensors **31a*'''*-31b*'''*** arranged in a grid configuration (i.e., in a rectangle, although other shapes may also be used). A display **92'"** is associated with the control panel **91*'''*** such that movement of an NFC circuit in up and down directions between NFC sensor pairs **31a*'''*, 31c*'''*** and **31b*'''*, 31d*'''*** respectively causes the channel and volume to go up and down. Thus, a gym key card with an NFC circuit, mobile device with an NFC circuit, etc., may be used to control the channel and volume operations as shown. Further, the timing of the swiping may affect the number of channels to be skipped or the rate at which the volume is changed, for example. The NFC circuit may also be used to identify the respective user or account.

It should be noted that different sensor configurations or grid sizes may be used in different embodiments, such as nine sensors arranged in a nine-button keypad configuration, which may be used to swipe an authentication sequence, a specific channel number, etc. Other examples include three NFC sensors arranged in an "L" configuration (e.g., up/down swiping controls channel changing, left/right swiping controls volume changing, etc.), five NFC sensors arranged in a plus or cross configuration, etc. Also, swiping of the NFC sensors **31a*'''*-31b*'''*** may be used to control device operations (e.g., audio playback operations, etc.) while exercising in some embodiments.

Various combinations of NFC sensors 31 may be used in different embodiments. For example, in the embodiment shown in FIG. 7, the NFC circuit of the mobile device **32*''*** may be configured as an active NFC reader, while the NFC sensors **31a*'*, 31b*'*** may be configured as passive NFC tags. Thus, for example, when moving the mobile device **32*''*** and up and down the sleeve, the mobile device serves as the active reader and is capable of reading a sequence and timing in which the passive NFC sensor tags **31a*'*, 31b*'*** are communicated with. This sequence is then translated into the appropriate device function, such as increasing or decreasing audio playback volume, etc., and actions such as tapping one of the passive NFC sensor tags **31a*'*, 31b*'*** may pause or resume audio playback, for example. Similar functions may be performed with other types of media, such as movies/videos, photos/images, etc. Movement of the mobile device **32*''*** up and down the sleeve could also perform other device functions, such as locking or unlocking the device (e.g., locking/unlocking the screen or keypad), for example.

Referring again to FIG. 2, in other embodiments the NFC circuit **34*'*** of the mobile device **32a*'*** may be configured as a passive tag (i.e., operating in low power mode), and the NFC sensors **31a*'*-31c*'*** may be configured as active readers. For example, the active NFC sensors **31a*'*-31c*'*** may be placed behind a "gesture area*"* below a public electronic display in an array or matrix, similar to the embodiment described above with reference to FIG. 10 (but located adjacent the display, rather than on the treadmill **90*'''*).** Moving the mobile device **32a*'*** across the active NFC sensors **31a*'*-31c*'*** would allow multiple active readers in the array to read the passive NFC circuit **34*'*** in a set sequence. The second controller **38***'* may communicate with each of the active NFC sensors **31a*'*-31c*'*** to identify the sequence and timing of the gestures performed by the mobile device **32a*'*** (or **32b*'*),** and change the display output accordingly. The NFC circuit **34***'* of the mobile device **32a*'*** may advantageously have a unique identification (ID), and may thus identify to the second controller **38*'*** that the mobile device is of a particular brand or model, and brand or model specific interactions may therefore be performed with the display.

The above-noted example of a controllable external display may also be implemented with passive NFC sensors **31a*'-*31c*'*.** To change the display, the mobile device **32a*'*** may communicate with the second controller **38*'*** via the wireless transceiver **37a*'*** (e.g., Bluetooth, WiFi, etc.). This may be advantageous in some applications, however, in that passive NFC tags are generally less expensive than active NFC readers.

Similarly, either active or passive NFC sensors **31a*'-*31c*'*** may be used in applications such as the above-described automobile and exercise equipment embodiments. Generally speaking, if the NFC sensors **31a*'*-31c*'*** are passive and the NFC circuit **34a*'*** is configured as an active reader, if a power savings mode is implemented by the first controller **35a*'*** (i.e., to cycle power to the NFC circuit), a potential for missing one or more NFC sensors in the movement sequence is possible depending upon the timing of movement. More particularly, power cycling is sometimes used to lower NFC power requirements by turning the NFC reader on and off in rapid sequence. However, if the NFC sensors **31a*'*-31c*'*** are configured as active readers in an "always on" mode, the NFC circuit **34a*'*** may be configured as a passive tag with less chance of missing an NFC communication with one of the NFC sensors **31a*'*-31c*'*** as the mobile device **32a*'*** is gestured past, providing enhanced responsiveness. Additionally, both the NFC circuit **34a*'*** and the NFC sensors **31a*'*-31c*'*** may be active readers in some embodiments, with or without power cycling.

It should be noted that a same NFC sensor **31*'*** may be scanned more than once during a sequence. More particularly, a number of successive taps and their duration may also be indicative of intent, similar to Morse code, as long as the communication is broken between taps (which requires that the mobile device **32a*'*** and NFC sensor **31*'*** go out of range between the taps). Another implementation includes the use of Hall effect sensors and a magnet to keep track of the number of successive "taps" of the mobile device **32a*'***. Additionally, in some embodiments proximity may be determined based upon variations in signal strength (e.g., RSSI (received signal strength indication)) when the mobile device **32a*'*** is in motion between two neighboring sensors to increase the resolution of the tracked position.

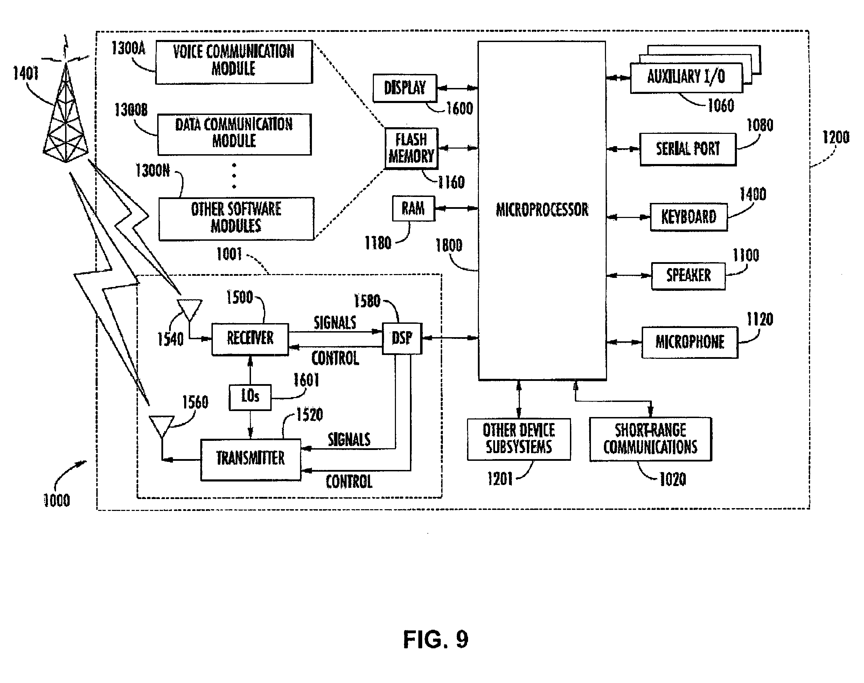

Exemplary components of a mobile wireless communications device **1000** that may be used in accordance with the above-described embodiments are further described below with reference to FIG. 9. The device **1000** illustratively includes a housing **1200**, a keypad **1400** and an output device **1600**. The output device shown is a display **1600**, which may comprise a full graphic LCD. Other types of output devices may alternatively be utilized. A processing device **1800** is contained within the housing **1200** and is coupled between the keypad **1400** and the display **1600**. The processing device **1800** controls the operation of the display **1600**, as well as the overall operation of the mobile device **1000**, in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800**, other parts of the mobile device **1000** are shown schematically in FIG. 9. These include a communications subsystem **1001;** a short-range communications subsystem **1020**; the keypad **1400** and the display **1600,** along with other input/output devices **1060, 1080, 1100** and 1120; as well as memory devices **1160**, **1180** and various other device subsystems **1201**. The mobile device **1000** may comprise a two-way RF communications device having data and, optionally, voice communications capabilities. In addition, the mobile device 1000 may have the capability to communicate with other computer systems via the Internet.

Operating system software executed by the processing device **1800** is stored in a persistent store, such as the flash memory **1160**, but may be stored in other types of memory devices, such as a read only memory (ROM) or similar storage element. In addition, system software, specific device applications, or parts thereof, may be temporarily loaded into a volatile store, such as the random access memory (RAM) **1180**. Communication signals received by the mobile device may also be stored in the RAM **1180**.

The processing device **1800,** in addition to its operating system functions, enables execution of software applications **1300A-1300N** on the device **1000**. A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401**. The PIM data items may be seamlessly integrated, synchronized and updated via the wireless network **1401** with corresponding data items stored or associated with a host computer system.

Communication functions, including data and voice communications, are performed through the communications subsystem **1001**, and possibly through the short-range communications subsystem. The communications subsystem **1001** includes a receiver **1500**, a transmitter **1520**, and one or more antennas **1540** and **1560**. In addition, the communications subsystem **1001** also includes a processing module, such as a digital signal processor (DSP) **1580**, and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000**. The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500**, which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520**. For example, gains applied to communications signals in the receiver **1500** and transmitter **1520** may be adaptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device 1800 for an output to the display 1600, or alternatively to some other auxiliary I/O device **1060**. A device may also be used to compose data items, such as e-mail messages, using the keypad **1400** and/or some other auxiliary I/O device 1060, such as a touchpad, a rocker switch, a thumb-wheel, or some other type of input device. The composed data items may then be transmitted over the communications network 1401 via the communications subsystem **1001**.

In a voice communications mode, overall operation of the device is substantially similar to the data communications mode, except that received signals are output to a speaker **1100,** and signals for transmission are generated by a microphone **1120**. Alternative voice or audio I/O subsystems, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (32) comprising
a portable housing (33),
an NFC circuit (34) carried by said portable housing and configured to establish NFC communications with a plurality of spaced-apart NFC sensors (31a-31c) when moved in close proximity therewith, and
a first controller (35) carried by said portable housing and coupled to said NFC circuit and configured to perform different mobile device operations based upon a sequence in which said NFC sensors (31a-31c) are communicated with and the length of time taken to move the device between communication with successive NFC sensors (31a-31c).

2. The mobile wireless communications device (32) of claim 1 wherein the mobile device operation comprises a device lock or device unlock operation.

3. The mobile wireless communications device (32) of Claim 1 wherein the mobile device operation comprises a media playback operation.

4. The mobile wireless communications device (32) of Claim 3 wherein the media playback operation comprises an audio playback operation.

5. The mobile wireless communications device (32) of Claim 3 wherein the media playback operation comprises controlling a media volume operation.

6. The mobile wireless communications device (32) of Claim 1 further comprising a wireless transceiver (37a') coupled to said first controller (35a'); and wherein the first controller is further configured to initiate or discontinue communications via said wireless transceiver based upon a speed and sequence in which said NFC sensors (31a-31c) are communicated with.

7. The mobile wireless communications device (32) of Claim 1 wherein said plurality of spaced-apart NFC sensors (31a"-31b") are carried on a substrate (70").

8. The mobile wireless communications device (32) of Claim 7 wherein said substrate (70") comprises an article of clothing.

9. The mobile wireless communications device of Claim 1 wherein said plurality of spaced-apart NFC sensors are arranged in a grid.

10. A near-field communication "NFC" method for use with a plurality of spaced-apart NFC sensors (31a-31c) and at least one mobile wireless communications device (32) comprising a portable housing (33) and an NFC circuit (34) carried by the portable housing, the method comprising:
establishing NFC communications between the NFC circuit and the NFC sensors when the NFC circuit is moved in close proximity with the NFC sensors; and
performing different mobile device operations based upon a sequence in which the NFC sensors are communicated with and the length of time taken to move the device between communication with successive NFC sensors (31a-31c).

11. The method of claim 10 wherein the mobile device operation is a device lock or device unlock operation.

12. The method of Claim 10 wherein the mobile device operation is a media playback operation.

13. The method of Claim 12 wherein the media playback operation comprises an audio playback operation.

14. A near-field communication "NFC" system (30) comprising:
a plurality of spaced-apart NFC sensors (31a-31c); and
at least one mobile wireless communications device as claimed in any of claims 1-9.

15. The near-field communication "NFC" system (30) as claimed in claim 14 further comprising a second controller configured to perform a remote operation also based upon the sequence in which said NFC sensors are communicated with and the length of time taken to move the device between communication with successive NFC sensors (31a-31c).

## Patentansprüche

1. Eine mobile drahtlose Kommunikationsvorrichtung (32), die aufweist ein tragbares Gehäuse (33),
eine NFC-Schaltung (34), die von dem tragbaren Gehäuse getragen wird und konfiguriert ist zum Herstellen von NFC-Kommunikationen mit einer Vielzahl von beabstandeten NFC-Sensoren (31a-31c), wenn in Nähe zu diesen gebracht, und
eine erste Steuervorrichtung (35), die von dem tragbaren Gehäuse getragen wird und mit der NFC-Schaltung gekoppelt ist und konfiguriert ist zum Durchführen verschiedener Operationen der mobilen Vorrichtung basierend auf einer Sequenz, in der mit den NFC-Sensoren (31a-31c) kommuniziert wird, und der Zeitdauer, die erforderlich ist, um die Vorrichtung zwischen einer Kommunikation mit aufeinanderfolgenden NFC-Sensoren (31a-31c) zu bewegen.

2. Die mobile drahtlose Kommunikationsvorrichtung (32) gemäß Anspruch 1, wobei die Operation der mobilen Vorrichtung eine "Vorrichtung sperren" - oder "Vorrichtung entsperren"-Operation aufweist.

3. Die mobile drahtlose Kommunikationsvorrichtung (32) gemäß Anspruch 1, wobei die Operation der mobilen Vorrichtung eine Media-Wiedergabe-Operation aufweist.

4. Die mobile drahtlose Kommunikationsvorrichtung (32) gemäß Anspruch 3, wobei die Media-Wiedergabe-Operation eine Audio-Wiedergabe-Operation aufweist.

5. Die mobile drahtlose Kommunikationsvorrichtung (32) gemäß Anspruch 3, wobei die Media-Wiedergabe-Operation ein Steuern einer Media-Lautstärke-Operation aufweist.

6. Die mobile drahtlose Kommunikationsvorrichtung (32) gemäß Anspruch 1, die weiter einen drahtlosen Transceiver (37a') aufweist, der mit der ersten Steuervorrichtung (35a') gekoppelt ist; und wobei die erste Steuervorrichtung weiter konfiguriert ist zum Initiieren oder Beenden von Kommunikationen über den drahtlosen Transceiver basierend auf einer Geschwindigkeit und Sequenz, in der mit den NFC-Sensoren (31a-31c) kommuniziert wird.

7. Die mobile drahtlose Kommunikationsvorrichtung (32) gemäß Anspruch 1, wobei die Vielzahl von beabstandeten NFC-Sensoren (31a"-31b") auf einem Substrat (70") getragen wird.

8. Die mobile drahtlose Kommunikationsvorrichtung (32) gemäß Anspruch 7, wobei das Substrat (70") ein Kleidungsstück aufweist.

9. Die mobile drahtlose Kommunikationsvorrichtung gemäß Anspruch 1, wobei die Vielzahl von beabstandeten NFC-Sensoren in einem Gitter angeordnet sind.

10. Ein Nahfeldkommunikations(NFC - near-field communication)-Verfahren zur Verwendung mit einer Vielzahl von beabstandeten NFC-Sensoren (31a-31c) und zumindest einer mobilen drahtlosen Kommunikationsvorrichtung (32), die ein tragbares Gehäuse (33) und eine NFC-Schaltung (34) aufweist, die von dem tragbaren Gehäuse getragen wird, wobei das Verfahren aufweist:
Herstellen von NFC-Kommunikationen zwischen der NFC-Schaltung und den NFC-Sensoren, wenn die NFC-Schaltung in Nähe zu den NFC-Sensoren gebracht wird; und
Durchführen verschiedener Operationen der mobilen Vorrichtung basierend auf einer Sequenz, in der mit den NFC-Sensoren kommuniziert wird, und der Zeitdauer, die erforderlich ist, um die Vorrichtung zwischen einer Kommunikation mit aufeinanderfolgenden NFC-Sensoren (31a-31c) zu bewegen.

11. Das Verfahren gemäß Anspruch 10, wobei die Operation der mobilen Vorrichtung eine "Vorrichtung sperren"- oder "Vorrichtung entsperren"-Operation ist.

12. Das Verfahren gemäß Anspruch 10, wobei die Operation der mobilen Vorrichtung eine Media-Wiedergabe-Operation ist.

13. Das Verfahren gemäß Anspruch 12, wobei die Media-Wiedergabe-Operation eine Audio-Wiedergabe-Operation aufweist.

14. Ein Nahfeldkommunikations(NFC - near-field communication)-System (30), das aufweist:
eine Vielzahl von beabstandeten NFC-Sensoren (31a-31c); und
zumindest eine mobile drahtlose Kommunikationsvorrichtung gemäß einem der Ansprüche 1-9.

15. Das Nahfeldkommunikations(NFC - near-field communication)-System (30) gemäß Anspruch 14, das weiter eine zweite Steuervorrichtung aufweist, die konfiguriert ist zum Durchführen einer entfernten Operation ebenfalls basierend auf der Sequenz, in der mit den NFC-Sensoren kommuniziert wird, und der Zeitdauer, die erforderlich ist, um die Vorrichtung zwischen einer Kommunikation mit aufeinanderfolgenden NFC-Sensoren (31a-31c) zu bewegen.

## Revendications

1. Dispositif de communications sans fil mobile (32) comprenant :
un boîtier portable (33),
un circuit NFC (34) porté par ledit boîtier portable et configuré pour établir des communications en champ proche (NFC « pour Near-Field Communication ») avec une pluralité de capteurs NFC espacés (31a-31c) lorsqu'il est déplacé à proximité immédiate de ceux-ci, et
un premier dispositif de commande (35) porté par ledit boîtier portable et couplé audit circuit NFC et configuré pour exécuter différentes opérations de dispositif mobile sur la base d'une séquence de communications avec lesdits capteurs NFC (31a-31c), et de la durée prise pour déplacer le dispositif entre une communication avec des capteurs NFC successifs (31a-31c).

2. Dispositif de communications sans fil mobile (32) de la revendication 1, dans lequel l'opération de dispositif mobile comprend une opération de verrouillage de dispositif ou de déverrouillage de dispositif.

3. Dispositif de communications sans fil mobile (32) de la revendication 1, dans lequel l'opération de dispositif mobile comprend une opération de lecture multimédia.

4. Dispositif de communications sans fil mobile (32) de la revendication 3, dans lequel l'opération de lecture multimédia comprend une opération de lecture audio.

5. Dispositif de communications sans fil mobile (32) de la revendication 3, dans lequel l'opération de lecture multimédia comprend le fait de commander une opération de volume multimédia.

6. Dispositif de communications sans fil mobile (32) de la revendication 1, comprenant en outre un émetteur-récepteur sans fil (37a') couplé audit premier dispositif de commande (35a') ; et dans lequel le premier dispositif de commande est en outre configuré pour initier ou arrêter des communications par l'intermédiaire dudit émetteur-récepteur sans fil sur la base d'une vitesse et d'une séquence de communications avec lesdits capteurs NFC (31a-31c).

7. Dispositif de communications sans fil mobile (32) de la revendication 1, dans lequel ladite pluralité de capteurs NFC espacés (31a"-31b") sont portés sur un substrat (70").

8. Dispositif de communications sans fil mobile (32) de la revendication 7, dans lequel ledit substrat (70") comprend un article d'habillement.

9. Dispositif de communications sans fil mobile de la revendication 1, dans lequel ladite pluralité de capteurs NFC espacés sont agencés en grille.

10. Procédé de communication en champ proche, « NFC » pour Near-Field Communication, à utiliser avec une pluralité de capteurs NFC espacés (31a-31c) et au moins un dispositif de communications sans fil mobile (32) comprenant un boîtier portable (33) et un circuit NFC (34) porté par le boîtier portable, le procédé comprenant le fait :
d'établir des communications NFC entre le circuit NFC et les capteurs NFC lorsque le circuit NFC est déplacé à proximité immédiate des capteurs NFC ; et
d'exécuter différentes opérations de dispositif mobile sur la base d'une séquence de communications avec les capteurs NFC et de la durée prise pour déplacer le dispositif entre une communication avec des capteurs NFC successifs (31a-31c).

11. Procédé de la revendication 10, dans lequel l'opération de dispositif mobile est une opération de verrouillage de dispositif ou de déverrouillage de dispositif.

12. Procédé de la revendication 10, dans lequel l'opération de dispositif mobile est une opération de lecture multimédia.

13. Procédé de la revendication 12, dans lequel l'opération de lecture multimédia comprend une opération de lecture audio.

14. Système de communication en champ proche, « NFC » pour Near-Field Communication, (30) comprenant :
une pluralité de capteurs NFC espacés (31a-31c) ; et
au moins un dispositif de communications sans fil mobile tel que revendiqué dans l'une des revendications 1 à 9.

15. Système de communication en champ proche « NFC » (30) tel que revendiqué dans la revendication 14, comprenant en outre un deuxième dispositif de commande configuré pour exécuter une opération à distance également sur la base de la séquence de communications avec lesdits capteurs NFC et de la durée prise pour déplacer le dispositif entre une communication avec des capteurs NFC successifs (31a-31c).
